# EUROPÄISCHE PATENTSCHRIFT

(11) **EP 2 010 413 B1**
(45) Veröffentlichungstag und Bekanntmachung des Hinweises auf die Patenterteilung: **17.10.2012**
(21) Anmeldenummer: 07723958.0
(22) Anmeldetag: 04.04.2007
(51) Int. Cl.: B60Q 1/14, F21S 8/10, F21V 14/08, F21S 8/12

(54) **KRAFTFAHRZEUGSCHEINWERFER**
AUTOMOTIVE HEADLIGHT
PROJECTEUR DE VÉHICULE À MOTEUR

(30) Priorität: 26.04.2006 DE 102006019287
(43) Veröffentlichungstag der Anmeldung: 07.01.2009
(73) Patentinhaber: Bayerische Motoren Werke Aktiengesellschaft, 80809 München (DE)
(72) Erfinder: ENDERS, Martin, 82041 Deisenhofen (DE)
(74) Vertreter: Mayer-Martin, Christian
(86) Internationale Anmeldenummer: PCT/EP2007/003017
(87) Internationale Veröffentlichungsnummer: WO 2007/124837

(56) Entgegenhaltungen:
- EP-A- 1 191 279
- EP-A- 1 684 004
- EP-A1- 1 369 639
- EP-A2- 1 160 506
- DE-A1- 10 248 445
- DE-A1- 10 347 951

## Beschreibung

Die Erfindung betrifft einen Kraftfahrzeugscheinwerfer mit einer Basis-Lichtquelle und einer Infrarot-Lichtquelle.

Die rasante technologische Entwicklung auf dem Gebiet der Kraftfahrzeugbeleuchtungstechnik führt zur Integration einer zunehmenden Anzahl von Funktionalitäten in einen Kraftfahrzeugscheinwerfer.

So sind bereits Kraftfahrzeugscheinwerfer bekannt, welche Infrarotlicht abstrahlen, um dieses im Rahmen eines Nachtsichtsystems zu nützen. Dabei wird von Objekten oder Passanten reflektiertes Infrarotlicht durch eine Sensoreinrichtung erfasst, in Bilder der Objekte oder Passanten umgesetzt, und diese auf einer Anzeigeeinrichtung dargestellt.

DE 103 47 951 A1 offenbart eine Beleuchtungseinrichtung für Fahrzeuge mit einer Infraret - Lichtquelle, die auf einer bewegbaren Blende angebracht ist.

Zudem sind Kraftfahrzeugscheinwerfer bekannt, welche zur Anpassung an eine kurvige Straßenführung oder im Rahmen einer Leuchtweitenregulierung verschwenkbar oder teilweise verschwenkbar ausgeführt sind.

Der Erfindung liegt nun die Aufgabe zu Grunde, einen Kraftfahrzeugscheinwerfer anzugeben, der flexibel einsetzbar ist.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, einen Kraftfahrzeugscheinwerfer mit einer schwenkbaren Trägereinrichtung.auszustatten, welche sowohl eine Basis-Lichtquelle als auch eine Infrarot-Lichtquelle trägt.

Dadurch wird erreicht, dass mit nur einem Schwenkmechanismus automatisch sowohl die Abstrahlrichtung der Basis-Lichtquelle als auch die Abstrahlrichtung der Infrarot-Lichtquelle entsprechend geändert werden kann. Zudem erfordert dieser Kraftfahrzeugscheinwerfer nur wenig Bauraum.

Dadurch kann beispielsweise die Basis-Lichtquelle durch entsprechende Verschwenkungen der Trägereinrichtung im Rahmen eines adaptiven Kurvenlichtsystems an die zu befahrende Strecke und im Rahmen einer Leuchtweitenregulierung an den Nickwinkel des Fahrzeuges angepasst werden. Automatisch kann dabei ohne zusätzlichen Steueraufwand und ohne einen zusätzlichen Verschwenkungsmechanismus eine Infrarot-Lichtquelle durch eine entsprechende Verschwenkung entsprechend an die zu befahrende Strecke und an den Nickwinkel des Fahrzeuges angepasst werden.

Dadurch wird durch die Infrarot-Lichtquelle automatisch bevorzugt der vor dem Fahrzeug liegende Bereich ausgeleuchtet, der für den Fahrer von vorrangiger Bedeutung ist. Bei Verwendung eines infrarotbasierten Nachtsichtsystems können dann Objekte in diesem Bereich besonders gut detektiert werden.

Die Trägereinrichtung ist vorzugsweise als Tragrahmen bzw. als Kraftfahrzeugscheinwerfermodul ausgestaltet, welcher bzw. welches eine Linse, ein Abdeckglas, einen Reflektor, eine Blende und/oder ein Gehäuse, welches die Basis-Lichtquelle umgibt, trägt (mittelbar oder unmittelbar) bzw. umfasst.

Insgesamt wird so ein flexibler Kraftfahrzeugscheinwerfer geschaffen, der bei aktiviertem und deaktiviertem Nachtsichtsystem adaptiv einsetzbar ist, und zudem insbesondere durch die Integration zweier verschiedener Lichtquellen in ein Kraftfahrzeugscheinwerfermodul ökonomisch herstellbar und in ein Fahrzeug einbaubar ist.

Vorzugsweise trägt oder umfasst die Trägereinrichtung einen Linsenhalter, welcher die Infrarot-Lichtquelle trägt. Insbesondere ist dabei die Verbindung zwischen Infrarot-Lichtquelle und Linsenhalter derart ausgeführt, dass der Linsenhalter als Kühlelement für die Infrarot-Lichtquelle wirkt.

Nach einer bevorzugten Ausgestaltung trägt oder umfasst die Trägereinrichtung einen Reflektor, welcher die Infrarot-Lichtquelle trägt. Insbesondere ist dabei die Verbindung zwischen Infrarot-Lichtquelle und Reflektor derart ausgeführt, dass der Reflektor als Kühlelement für die Infrarot-Lichtquelle wirkt.

Es ist vorgesehen, dass die Trägereinrichtung eine Blende trägt oder umfasst, welche entsprechend verschiedenen Betriebsarten des Kraftfahrzeugscheinwerfers, beispielsweise "Fernlicht" und "Abblendlicht", in verschiedene Positionen positionierbar ist, und welche die Infrarot-Lichtquelle trägt. Insbesondere ist dabei die Verbindung zwischen Infrarot-Lichtquelle und Blende derart ausgeführt, dass die Blende als Kühlelement für die Infrarot-Lichtquelle wirkt.

Die Infrarot-Lichtquelle ist dabei derart mit der Blende verbunden, und die Blende derart positionierbar, dass von der Infrarot-Lichtquelle abgestrahltes Licht in einer Betriebsart, beispielsweise in der Betriebsart "Abblendlicht", im Strahlengang des von der Basis-Lichtquelle abgestrahlten Lichtes liegt. Beispielsweise ist die Infrarot-Lichtquelle in der Betriebsart "Abblendlicht" aktiv, und die Blende samt Infrarot-Lichtquelle derart vor der Basis-Lichtquelle positioniert, dass das sichtbare Licht der Basis-Lichtquelle als Abblendlicht zusammen in einem Strahlengang mit dem Infrarot-Licht der Infrarot-Lichtquelle ausritt. Eine Gefährdung der Augen eines Passanten durch die unsichtbare Infrarot-Strahlung kann dadurch verhindert werden.

In der Betriebsart "Fernlicht" ist die Blende samt Infrarot-Lichtquelle beispielsweise nicht vor der Basis-Lichtquelle positioniert, sondern beispielsweise weggeschwenkt oder eingezogen, so dass sichtbares Licht von der Basis-Lichtquelle als Fernlicht austritt. Vorzugsweise ist dabei das Nachtsichtsystem, insbesondere die Infrarot-Lichtquelle, in der Betriebsart "Fernlicht" deaktiviert.

Vorzugsweise trägt oder umfasst die Trägereinrichtung eine Blende, welche entsprechend verschiedenen Betriebsarten des Kraftfahrzeugscheinwerfers, beispielsweise "Fernlicht" und "Abblendlicht", in verschiedene Positionen positionierbar ist, und welche einen Reflektor trägt, der in einer Position das von der Infrarot-Lichtquelle abgestrahlte Licht in den Strahlengang der Basis-Lichtquelle reflektiert oder lenkt.

Die Basis-Lichtquell ist derart eingerichtet, dass sie neben dem sichtbaren Licht ein Infrarot-Licht abstrahlt. Erfindungsgemäß umfasst die Blende einen Infrarot-durchlässigen Filter, so dass zumindest annähernd der gesamte Infrarot-Anteil des von der Basis-Lichtquelle abgestrahlten Lichtes auch bei vor der Basis-Lichtquelle positionierter Blende, beispielsweise in der Betriebsart "Abblendlicht", durch den Kraftfahrzeugscheinwerfer abgestrahlt wird, und so beispielsweise für ein Nachtsichtsystem nutzbar gemacht werden kann. Zusätzlich kann in der Betriebsart "Abblendlicht" die Infrarot-Lichtquelle aktiviert werden.

Erfindungsgemäß ist ein Kraftfahrzeugscheinwerfer mit einer Basis-Lichtquelle einer Infrarot-Lichtquelle, und einer Blende, welche in einer ersten Betriebsart des Kraftfahrzeugscheinwerfers vor der Basis-Lichtquelle positioniert ist, und welche in einer zweiten Betriebsart nicht vor der Basis-Lichtquelle positioniert ist. Die Blende ist für sichtbares Licht nicht durchlässig und für Infrarot-Licht zumindest teilweise durchlässig. Bevorzugt ist eine Infrarot-Lichtquelle vorgesehen, welche in der ersten Betriebsart des Kraftfahrzeugscheinwerfers aktiviert ist, um den Einsatz eines Nachtsichtsystems zu ermöglichen, wobei die Infrarot-Lichtquelle derart ausgelegt ist und derart an die Infrarotdurchlässigkeit der Blende und an das Nachtsichtsystem, insbesondere an dessen Infrarotsensor, angepasst ist, dass das gesamte von dem Kraftfahrzeugscheinwerfer abgestrahlte Infrarot-Licht für den Einsatz des Nachtsichtsystems ausreicht oder mindestens 3 Prozent über der Schwelle liegt, ab welcher ein Einsatz oder Betrieb des Nachtsichtsystems möglich ist.

Nach einer vorteilhaften Weiterbildung der Erfindung ist die Infrarot-Lichtquelle halbleiterbasiert, insbesondere LED (Light Emitting Diode)-basiert oder laserbasiert ausgestaltet, und derart hergerichtet, dass sie Licht bevorzugt im infraroten Wellenlängenspektrum abstrahlt.

Die Basis-Lichtquelle ist vorzugsweise als Halogenlampe, als Gasentladungslampe (z.B. Xenon-Lampe) oder halbleiterbasiert ausgeführt, und derart hergerichtet, dass sie Licht bevorzugt im sichtbaren Wellenlängenspektrum abstrahlt. Besonders bevorzugt ist die Basis-Lichtquelle als Bi-Xenon-Lichtquelle ausgeführt.

Vorzugsweise ist die Trägereinrichtung zumindest in bestimmten Betriebsarten oder Fahrsituationen in Abhängigkeit von der Stellung des Lenkrades, der Vorderräder und/oder der Gierrate automatisch schwenkbar, insbesondere im Rahmen eines automatischen Kurvenlichtsystems.

Die Trägereinrichtung ist vorteilhafterweise zumindest in bestimmten Betriebsarten oder Fahrsituationen in Abhängigkeit vom Nickwinkel des Kraftfahrzeuges automatisch schwenkbar, insbesondere im Rahmen einer Leuchtweitenregulierung.

Im Folgenden wird die Erfindung anhand von Beispielen unter Bezugnahme auf die folgende Figur näher erläutert:

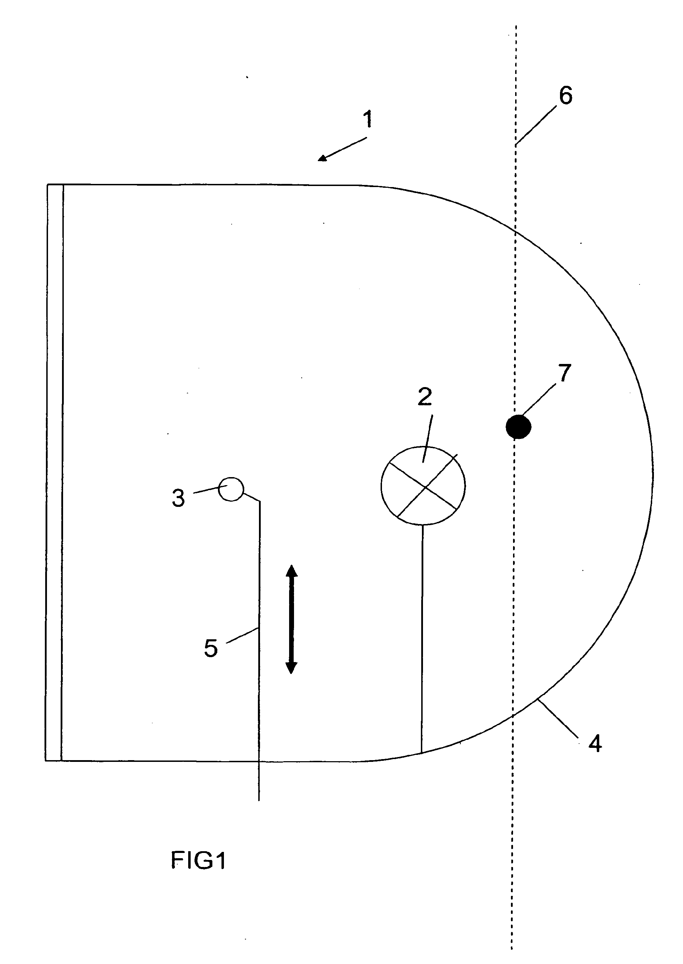

- Figur 1: zeigt eine Schnittdarstellung eines Kraftfahrzeugscheinwerfers.

In Figur 1 ist ein Kraftfahrzeugscheinwerfer 1 dargestellt, der als Basis-Lichtquelle 2 eine Gasentladungslame aufweist. Eine Infrarot-Lichtquelle 3, welche mehrere Infrarot-LEDs umfassen kann, wird von einer Blende 5 getragen, welche ja nach Betriebsart des Kraftfahrzeugscheinwerfers 1 in verschiedene Stellungen positionierbar ist. Diese Positionierbarkeit wird durch den Doppelpfeil veranschaulicht.

Die Basis-Lichtquelle 2, die Blende 5 und damit auch die Infrarot-Lichtquelle 3 werden durch eine Trägereinrichtung 4 getragen, welche im Beispiel auch das Gehäuse, den Reflektor und die Abdeckscheibe des Kraftfahrzeugscheinwerfers trägt oder umfasst. Zudem können eine nicht dargestellte Linse und nicht dargestellte Filtermittel vorgesehen sein.

Im gezeigten Betriebszustand (Leuchtfunktion mit einer Hell-Dunkel-Grenze, zum Beispiel Abblendlicht, Autobahnlicht, Nebellicht, oder eine andere Leuchtfunktion) ist die Blende 5 samt Infrarot-Lichtquelle 3 vor der Basis-Lichtquelle 2 positioniert, so dass nur ein Teil des von der Basis-Lichtquelle abgestrahlten Lichtes durch den Kraftfahrzeugscheinwerfer abgestrahlt wird. In dieser Betriebsart wird daher die Infrarot-Lichtquelle 3 aktiviert, um durch den Kraftfahrzeugscheinwerfer 1 genügend Infrarot-Licht für die Verwendung eines Nachtsichtsystems abzustrahlen. Dabei verläuft die Infrarot-Strahlung im Strahlengang der Basis-Lichtquelle.

In einem anderen nicht dargestellten Betriebszustand (Fernlicht oder Zusatzfernlicht) ist die Blende 5 samt Infrarot-Lichtquelle 3 nicht vor der Basis-Lichtquelle 2 positioniert sondern eingezogen oder aus dem Strahlengang der Basis-Lichtquelle 2 geschwenkt. In dieser Betriebsart wird die Infrarot-Lichtquelle 3 deaktiviert, da der Einsatz eines Nachtsichtsystems nicht erforderlich ist oder der von der Basis-Lichtquelle abgestrahlte Infrarot-Anteil zu einem großen Anteil durch den Kraftfahrzeugscheinwerfer 1 abgestrahlt wird, so dass für die Verwendung eines Nachtsichtsystems kein weiteres Infrarot-Licht erzeugt werden muss.

Die Trägereinrichtung 4 ist im Rahmen eines automatischen Kurvenlichtsystems um die Achse 6 schwenkbar und im Rahmen einer automatischen Leuchtweitenregulierung um eine senkrecht zur Blattebene stehende Achse 7 schwenkbar.

Zum Umschalten des Kraftfahrzeugscheinwerfers 1 in verschiedene Betriebsarten, zur entsprechenden Positionierung der Blende, zur entsprechenden Aktivierung bzw. Deaktivierung der Infrarot-Lichtquelle 3 und zur Verschwenkung der Trägereinrichtung sind geeignete Positioniermechanismen, Schwenkmechanismen und Steuer- oder Schaltmittel vorgesehen, welche einem Fachmann an sich hinreichend bekannt sind, und auf welche daher an dieser Stelle nicht näher eingegangen wird.

## Patentansprüche

1. Kraftfahrzeugscheinwerfer (1) mit
einer Basis-Lichtquelle (2),
einer Infrarot-Lichtquelle (3), und
einer schwenkbaren Trägereinrichtung (4), durch welche die Basis-Lichtquelle (2) und die Infrarot-Lichtquelle (3) getragen werden,
bei dem die Basis-Lichtquelle derart eingerichtet, dass sie neben dem sichtbaren Licht ein Infrarot-Licht abstrahlt,
bei dem die Trägereinrichtung (4) eine Blende (5) trägt oder umfasst, welche entsprechend verschiedenen Betriebsarten des Kraftfahrzeugscheinwerfers in verschiedene Positionen positionierbar ist, und welche die Infrarot-Lichtquelle (3) trägt,
bei dem die Infrarot-Lichtquelle (3) derart mit der Blende verbunden ist, und die Blende derart positionierbar ist, dass von der Infrarot-Lichtquelle (3) abgestrahltes Licht in einer ersten Betriebsart, insbesondere der Abblendlicht-Betriebsart, im Strahlengang des von der Basis-Lichtquelle (2) abgestrahlten Lichtes liegt, und dass in einer zweiten Betriebsart, insbesondere der Fernlicht-Betriebsart, die Blende samt Infrarot-Lichtquelle nicht vor der Basis-Lichtquelle liegt,
bei dem in der ersten Betriebsart, insbesondere der Abblendlicht-Betriebsart, die Infrarot-Lichtquelle aktivierbar ist,
**dadurch gekennzeichnet, daß**
die Blende einen infrarotdurchlässigen Filter umfasst, so dass ein Infrarot-Anteil des von der Basis-Lichtquelle abgestrahlten Lichtes auch bei vor der Basis-Lichtquelle positionierter Blende durch den Kraftfahrzeugscheinwerfer abgestrahlt wird,

2. Kraftfahrzeugscheinwerfer nach Anspruch 1,
bei dem die Trägereinrichtung (4) ein Gehäuse umfasst, welches die Basis-Lichtquelle (2) umgibt.

3. Kraftfahrzeugscheinwerfer nach einem der vorhergehenden Ansprüche,
bei dem die Trägereinrichtung (4) als Kraftfahrzeugscheinwerfermodul ausgeführt ist.

4. Kraftfahrzeugscheinwerfer nach einem der vorhergehenden Ansprüche,
bei dem die Infrarot-Lichtquelle (3) halbleiterbasiert ausgeführt ist.

5. Kraftfahrzeugscheinwerfer nach einem der vorhergehenden Ansprüche,
bei dem die Basis-Lichtquelle (2) als Halogenlampe, als Gasentladungslampe oder halbleiterbasiert ausgeführt ist.

6. Kraftfahrzeugscheinwerfer nach einem der vorhergehenden Ansprüche,
bei dem die Trägereinrichtung (4) in Abhängigkeit von der Stellung des Lenkrades automatisch schwenkbar ist.

7. Kraftfahrzeugscheinwerfer nach einem der vorhergehenden Ansprüche,
bei dem die Trägereinrichtung (4) In Abhängigkeit vom Nickwinkel des Kraftfahrzeuges automatisch schwenkbar ist.

## Claims

1. A motor vehicle headlight (1) having a base light source (2), an infrared light source (3), and a pivotable carrier device (4), by which the base light source (2) and the infrared light source (3) are carried, in which the base light source is set up in such a way that apart from the visible light, it emits an infrared light, in which the carrier device (4) carries or comprises a faceplate (5), which can be positioned in various positions in accordance with various modes of operation of the motor vehicle headlight, and which carries the infrared light source (3), in which the infrared light source (3) is connected to the faceplate in such a way, and the faceplate can be positioned in such a way that light emitted by the infrared light source (3) in a first mode of operation, more especially the dipped beam mode of operation, is in the beam path of the light emitted by the base light source (2), and in that in a second mode of operation, more especially the main beam mode of operation, the faceplate together with the infrared light source is not located in front of the base light source, in which in the first mode of operation, more especially the dipped beam mode of operation, the infrared light source can be activated, **characterised in that** the faceplate comprises an infrared-permeable filter, so that an infrared fraction of the light emitted by the base light source is also emitted by the motor vehicle headlight when the faceplate is positioned in front of the base light source.

2. A motor vehicle headlight according to claim 1, wherein the carrier device (4) comprises a housing, which surrounds the base light source (2).

3. A motor vehicle headlight according to any one of the preceding claims, wherein the carrier device (4) is configured as a motor vehicle headlight module.

4. A motor vehicle headlight according to any one of the preceding claims, wherein the infrared light source (3) is semi-conductor based.

5. A motor vehicle headlight according to any one of the preceding claims, wherein the base light source (2) is configured as a halogen lamp, as a gas discharge lamp or is semi-conductor based.

6. A motor vehicle headlight according to any one of the preceding claims, wherein the carrier device (4) can be pivoted automatically depending on the position of the steering wheel.

7. A motor vehicle headlight according to any one of the preceding claims, wherein the carrier device (4) can be pivoted automatically depending on the pitch angle of the motor vehicle.

## Revendications

1. Projecteur de véhicule automobile (1) comportant :
- une source lumineuse de base (2),
- une source de lumière infrarouge (3), et
- une installation de support (4) basculante, portant la source de lumière de base (2) et la source de lumière infrarouge (3),
- la source de lumière de base rayonnant de la lumière infrarouge en plus de la lumière visible,
- l'installation de support (4) portant ou comportant un diaphragme (5) se plaçant dans différentes positions selon les différents modes de fonctionnement du projecteur de véhicule et portant aussi la source de lumière infrarouge (3),
- la source de lumière infrarouge (3) étant reliée au diaphragme et celui-ci pouvant être positionné dans un premier mode de fonctionnement, notamment en mode de feux de croisement, pour que la lumière émise par la source de lumière infrarouge (3) se situe dans le chemin des rayons de la lumière émis par la source de lumière de base (2), et
- dans un second mode de fonctionnement, notamment en mode de feux de route, le diaphragme avec la source de lumière infrarouge ne se trouvent pas devant la source de lumière de base,
- et dans le premier mode de fonctionnement, notamment le mode de fonctionnement de feux de croisement, la source de lumière infrarouge est activée,
projecteur **caractérisé en ce que**
le diaphragme comporte un filtre perméable au rayonnement infrarouge de façon que la fraction infrarouge de la lumière émise par la source de lumière de base soit également émise par le projecteur lorsque le diaphragme est placé devant la source lumineuse de base.

2. Projecteur de véhicule automobile selon la revendication 1, **caractérisé en ce que**
l'installation de support (4) comporte un boîtier qui entoure la source lumineuse de base (2).

3. Projecteur de véhicule automobile selon l'une des revendications précédentes,
**caractérisé en ce que**
l'installation de support (4) est un module de projecteur de véhicule automobile.

4. Projecteur de véhicule automobile selon l'une des revendications précédentes,
**caractérisé en ce que**
la source de lumière infrarouge (3) est réalisée avec des semi-conducteurs.

5. Projecteur de véhicule automobile selon l'une des revendications précédentes,
**caractérisé en ce que**
la source lumineuse de base (2) est une lampe halogène, une lampe à décharge de gaz ou une lampe à semi-conducteurs.

6. Projecteur de véhicule automobile selon l'une des revendications précédentes,
**caractérisé en ce que**
l'installation de support (4) est basculée automatiquement en fonction de la position du volant.

7. Projecteur de véhicule automobile selon l'une des revendications précédentes,
**caractérisé en ce que**
l'installation de support (4) est basculée automatiquement en fonction de l'angle de tangage du véhicule automobile.
